# FASCICULE DE BREVET EUROPEEN

(11) **EP 2 323 074 B1**
(45) Date de publication et mention de la délivrance du brevet: **16.03.2016**
(21) Numéro de dépôt: 10189787.4
(22) Date de dépôt: 03.11.2010
(51) Int. Cl.: G06K 19/07, G01P 21/00

(54) **Procédé de fabrication d'entités électroniques de poche ou portables à capteurs MEMS**
Verfahren zur Herstellung von tragbaren oder für die Tasche geeigneten elektronischen Einheiten mit MEMS-Sensoren
Method for manufacturing pocket or portable electronic entities with MEMS sensors

(30) Priorité: 06.11.2009 FR 0905348
(43) Date de publication de la demande: 18.05.2011
(73) Titulaire: Oberthur Technologies, 92700 Colombes (FR)
(72) Inventeur: Guitard, Vincent, 78400 Chatou (FR)
(74) Mandataire: Esselin, Sophie

(56) Documents cités:
- EP-A1- 2 031 548
- WO-A1-2007/031856
- VELTINK P H ET AL: "Procedure for in-use calibration of triaxial accelerometers in medical applications", SENSORS AND ACTUATORS A, ELSEVIER SEQUOIA S.A., LAUSANNE, CH LNKD- DOI:10.1016/S0924-4247(98)00049-1, vol. 68, no. 1-3, 15 juin 1998 (1998-06-15), pages 221-228, XP004139834, ISSN: 0924-4247

## Description

### DOMAINE DE L'INVENTION

Le domaine de l'invention concerne la fabrication d'entités électroniques de poche ou portable, telles que par exemple les cartes à microcircuit(s), les clefs électroniques, les organiseurs (PDA), les téléphones portables, les appareils photos, les consoles de jeu, les montres, utilisant des capteurs micro ou nano électromécaniques, communément appelés capteurs MEMS (pour *"Micro Machined Systems").*

### ETAT DE L'ART

Les capteurs reposant sur des micro ou nano systèmes électromécaniques (MEMS) associent un encombrement réduit, une grande sensibilité et une faible consommation. Ces qualités ont déjà utilisées pour élargir l'offre de service ou le panel de fonctionnalités des entités électroniques de poche ou portables grands publics, comme décrit par exemple dans la demande européenne publiée sous le numéro EP 2 031 548. Notamment des accéléromètres MEMS sont utilisés pour des fonctionnalités utilisant la détection de mouvement ou de position telles que la géo-localisation, interfaces utilisateurs plus intuitives, basculement automatique d'affichage en mode paysage ou portrait, stabilisation d'image, gestion de puissance intelligente, détection de chute... Des capteurs MEMS de pression sont utilisés pour donner notamment des informations d'altitude.

Dans le domaine de la téléphonie mobile, nombre de téléphones portables ont notamment été enrichis de fonctionnalités associées à la détection de mouvement et/ou de position.

Dans l'invention, on s'est intéressé à la possibilité d'utiliser des capteurs MEMS dans les cartes à microcircuit utilisées dans des dispositifs portables. Ces cartes y ont généralement une fonction de contrôle d'accès sécurisé à des services proposés par le dispositif portable, mais proposent également d'autres services ou applications, qui s'ajoutent à celles du dispositif portable hôte, mais qui sont d'un accès plus difficile car plus enfoui, à l'utilisateur. Par exemple, si on prend le domaine de la téléphonie mobile, les fournisseurs d'accès proposent généralement des téléphones portables qu'ils ont configurés. La carte à microcircuit communément appelée carte SIM, qui permet l'accès au réseau de téléphonie mobile, offre généralement à l'utilisateur des applications ou services propres au fournisseur d'accès, qui s'ajoutent aux applications implémentées sur le téléphone. Ces applications ou services de la carte SIM ne sont pas accessibles facilement par l'utilisateur, car elles n'apparaissent pas directement sur l'écran du téléphone, mais sont au contraire enfouies dans l'arborescence complexe des menus de plus en plus riches du téléphone. Pour y accéder l'utilisateur doit utiliser nombre d'onglets, boutons et/ou croix directionnelles, pour se déplacer dans les divers menus et arriver au service recherché. En outre les chemins d'accès varient d'un téléphone à l'autre. Si l'utilisateur change de téléphone, il doit ainsi généralement chercher le nouveau chemin d'accès. Cette recherche est fastidieuse.

Cet accès non direct, non convivial, aux applications et services associés à une carte à microcircuit est un frein sérieux à leur utilisation.

Une idée à la base de l'invention est ainsi d'intégrer des capteurs MEMS dans les cartes à microcircuit(s), pour notamment réveiller des applications propres à la carte, par exemple en déclenchant leur affichage, sur un écran du dispositif portable hôte de la carte. Par exemple, un capteur de mouvement intégré à une carte à microcircuit permet notamment la création d'une interface utilisateur plus intuitive, basée sur la gestuelle, entre les applications propres à la carte à microcircuit, et l'utilisateur. De cette façon, on rend accessible facilement les fonctionnalités, applications et services de la carte à microcircuit, à côté des fonctionnalités, applications et services du dispositif portable hôte de la carte à microcircuit, et l'utilisateur peut ainsi utiliser de façon très simple et intuitive tout le potentiel du système.

Les cartes à microcircuit, que ce soit des cartes SIM ou des cartes au format ID 1 comme les cartes bancaires par exemple, sont des objets rectangulaires, minces et sensiblement plats, avec une épaisseur normalisée de 0,76 millimètre. On considère ainsi que ce sont des objets à seulement deux dimensions, données par les bords de la carte dans le plan de surface.

Les capteurs MEMS de mouvement intégrés dans les téléphones portables actuels, accéléromètres, occupent typiquement une surface de l'ordre de 3 millimètres sur 3 millimètres, pour une épaisseur proche de 1 millimètre. Ces composants électroniques qui sont les plus petits du marché, sont encore trop épais pour être intégrés dans une carte à microcircuit.

Dans l'invention, on propose de réaliser un montage à nu des capteurs MEMS, c'est-à-dire sous forme de puce, non encore encapsulée dans un boitier.

L'intégration de puces de capteurs MEMS dans des cartes à microcircuit se révèle délicate, car les puces MEMS sont alors très sensibles aux différentes contraintes mécaniques qu'elles subissent pendant la fabrication de la carte. Notamment l'encartage de la puce dans l'épaisseur de carte, en particulier le placement, le collage, la réalisation des contacts, la protection de la puce MEMS par de la résine, l'encapsulation dans le corps de carte et la découpe du corps de carte sont autant d'étapes du procédé de fabrication de ces cartes qui génèrent des contraintes mécaniques sur cette puce.

Les efforts mécaniques exercés dans ces différentes étapes agissent sur les éléments sensibles de la puce MEMS, ce qui a des répercussions sur les caractéristiques de sortie du capteur, c'est-à-dire sur sa réponse. Si on prend en exemple un capteur accéléromètre, des valeurs de réglage en sortie d'usine de l'offset et de la sensibilité de mesure, c'est-à-dire du gain, sont mesurées en sortie d'usine et enregistrées en mémoire de l'accéléromètre. Ces valeurs de réglage ("trimming values") sont utilisées en interne par l'accéléromètre dans un algorithme de correction qui corrige la mesure sur chaque axe, avant de la fournir en sortie. Le senseur inertiel MEMS commercialisé par la société ST_{MICROELECTRONICS} sous la référence LIS3LV02DQ contient ainsi une mémoire non volatile contenant les valeurs de réglage de l'offset et du gain sur chaque axe, et des registres de réglage, utilisés par l'algorithme de correction de mesure de l'accéléromètre, et dans lesquels ces valeurs de réglage sont chargées à chaque mise sous tension.

Après intégration de la puce dans une carte à microcircuit, ces valeurs de réglage usine de l'accéléromètre ne seront généralement plus valides compte-tenu des contraintes mécaniques exercées sur la puce lors de cette intégration. Les mesures fournies en sortie par l'accéléromètre pourront être entachées d'erreurs, et par suite non fiables.

Il est impossible de prédire pour chaque capteur, dans quelle mesure ses caractéristiques seront affectées : cela peut varier d'une carte à l'autre dans un même lot de fabrication de cartes, ou d'une chaîne de fabrication à l'autre... Pour chaque carte, la mesure dans laquelle un capteur aura été contraint dépendra des conditions propres, individuelles dans lesquelles chaque carte aura été fabriquée.

### PROBLEME TECHNIQUE

Dans l'invention, on s'intéresse ainsi à l'intégration d'une manière simple et peu coûteuse, mais également fiable, de capteurs MEMS dans des cartes à microcircuit.

Une solution à ce problème technique est apportée par l'invention, dans un montage à nu des capteurs MEMS, combiné à l'utilisation judicieuse de l'étape de personnalisation électrique de données dans les unités électroniques de poche ou portables, réalisée en sortie de chaine de fabrication, pour réaliser une calibration de ces capteurs, conduite sur la carte finie, pour définir des données de réglage permettant de corriger les mesures fournies par les capteurs.

Cette solution peut se généraliser à d'autres entités électroniques de poche ou portables que les cartes à microcircuit(s), comme des clefs électroniques USB autoalimentées et à interface utilisateur propre (écran, bouton(s)), assistant personnel PDA, calculatrice, montre, appareil photo..., permettant une fabrication peu coûteuse et une plus grande intégration, tout en gardant une grande fiabilité.

### RESUME DE L'INVENTION

L'invention concerne donc un procédé de fabrication d'une entité électronique de poche ou portable à capteur(s) micro ou nano électromécanique(s), caractérisé en ce qu'il comprend une étape de fabrication de ladite entité électronique avec un montage à nu d'un capteur ou de capteurs dans ladite unité, suivie d'une étape de calibration dudit ou desdits capteurs, réalisée dans une étape de personnalisation électrique de ladite entité avec des données de personnalisation, et comprenant une étape d'activation de mesure(s) dudit ou desdits capteurs, une étape de calcul de valeurs de réglage du capteur utilisant ladite ou lesdites mesures et une ou des valeurs de référence, où une valeur de référence est une donnée de personnalisation de ladite entité, et une étape de programmation desdites valeurs de réglage dans ladite unité.

Suivant une variante de l'invention, l'entité électronique est une carte à microcircuit(s), et l'étape de calibration d'un capteur de ladite carte est avantageusement mise en oeuvre dans une machine de personnalisation à barillet à N positions, et comprend une étape d'activation de mesure(s) dudit capteur dans une ou des positions du barillet.

D'autres caractéristiques et avantages de l'invention sont détaillés dans la description suivante de modes de réalisation de l'invention, en référence aux dessins annexés, dans lesquels :
- la figure 1 est un schéma simplifié illustrant un procédé de fabrication selon l'invention appliqué à une carte à microcircuit à capteur MEMS intégré;
- les figures 2a à 2c montrent 3 positions d'une carte à microcircuit permettant la calibration de 3 axes d'un capteur accéléromètre MEMS, au moyen de la gravitation terrestre;
- les figures 3a et 3b sont des schémas simplifiés d'une machine de personnalisation à plateau rotatif du type à barillet N positions utilisé dans un procédé de fabrication selon l'invention,
- les figures 4a à 4b illustrent un perfectionnement pour la calibration de 3 axes d'un accéléromètre dans lequel les deux axes dans le plan de surface font chacun un angle α avec les deux dimensions de la carte;
- les figures 5a et 5b illustrent schématiquement la mise en oeuvre d'une étape de calibration d'un procédé de fabrication suivant l'invention.

Un procédé de fabrication selon l'invention comprend le montage à nu d'au moins un capteur MEMS dans une entité électronique portable ou de poche, et la calibration du capteur dans une étape de personnalisation électrique de l'entité. L'étape de personnalisation électrique d'une entité électronique portable est une étape dans laquelle des données sont programmées en mémoire non volatile, qui correspondent à des données d'application et de paramétrage. Certaines de ces données peuvent être communes à un type d'unités électroniques, et d'autres personnelles, propres à l'unité concernée. Suivant l'invention, la calibration au cours de l'étape de personnalisation, et comprend une étape d'activation d'au moins une mesure dans le capteur, et une étape de calcul d'une ou de valeur(s) de réglage utilisant la ou les mesures et une ou des valeurs de référence. Ces valeurs de référence sont des données de personnalisation. La ou les valeurs de réglage sont programmées à l'issue de la calibration, en mémoire non volatile dans l'unité électronique. Cette calibration est avantageuse et efficace, car elle intervient après que toutes les contraintes mécaniques de fabrication ont été exercées, et qu'elle est réalisée dans le temps de la personnalisation électrique, sans ajouter de temps de fabrication supplémentaire.

L'invention est illustrée de manière plus détaillée en prenant un exemple d'application à la fabrication de cartes à microcircuits à capteurs MEMS intégrés, par exemple une carte SIM ou une carte au format ID 1. Ces cartes sont toutes des objets 2D, car très minces, avec une surface plane sensiblement rectangulaire.

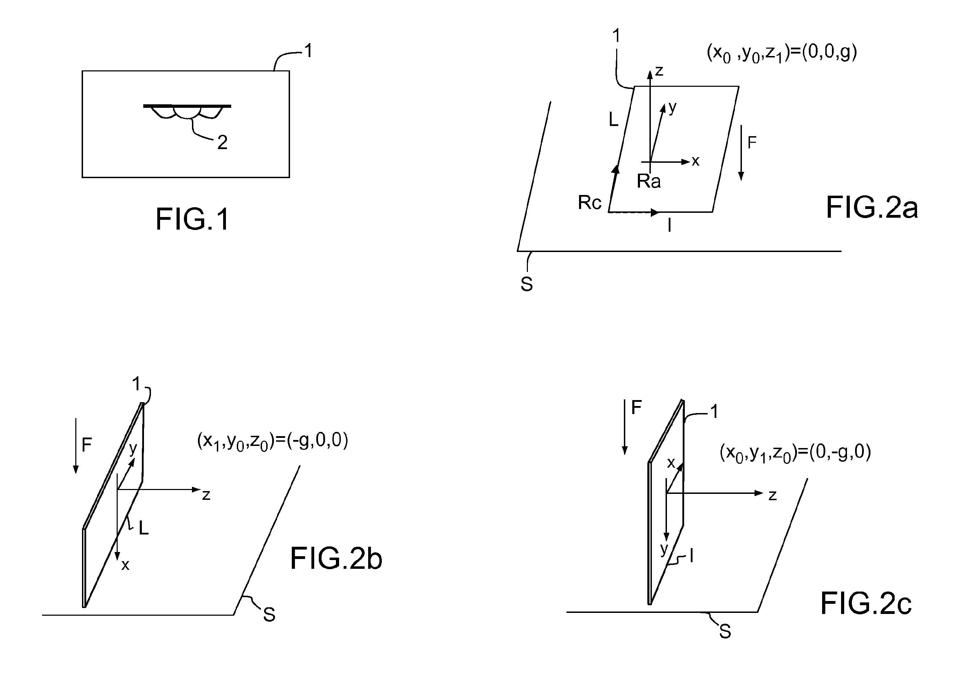

La figure 1 illustre schématiquement une telle carte à microcircuit(s) 1 intégrant un capteur MEMS 2, monté à nu dans l'épaisseur de la carte. L'étape de montage à nu utilise les techniques bien connues d'encartage de puces de microcircuit, notamment formation d'une cavité dans un support pour y placer la puce, collage, réalisation des contacts, notamment avec des pistes d'interconnexion avec d'autres puces de microcircuit(s)...etc. On peut même envisager que la fonction de capteur soit intégrée dans une puce de microcircuit de la carte.

Dans un exemple, le capteur MEMS est un capteur de pression donnant une mesure de la pression atmosphérique. Dans cet exemple, une calibration du capteur réalisée dans l'étape de personnalisation consiste à activer une mesure du capteur, et à la comparer à une valeur de référence programmée dans la carte, donnant la valeur de la pression atmosphérique ambiante. Cette valeur de référence qui est une des données de personnalisation programmée dans la carte dans l'étape de personnalisation, est par exemple fournie par une station météo attenante à la machine, lue directement par la machine ou entrée par un opérateur.

Dans un autre exemple, le capteur MEMS est un accéléromètre mono ou multiaxes. Les valeurs de réglage sont alors une valeur d'offset, correspondant à une accélération nulle, et une valeur de correction du gain du capteur, pour chaque axe, déterminée à partir de la mesure du gain, c'est à dire de la pente de la réponse du capteur (la relation linéaire entre la grandeur numérique de la grandeur physique mesurée par le capteur, typiquement une tension, et la valeur de l'accélération correspondante) à partir de deux points de mesure, et la comparaison avec une valeur de référence, qui est le gain attendu sur cet axe, correspondant à la spécification du capteur.

L'invention est plus particulièrement illustrée en prenant cet exemple de fabrication d'une carte à microcircuit(s) à capteur accéléromètre MEMS à trois axes x, y et z orthogonaux deux à deux. Un tel capteur fournit une mesure d'accélération par axe de mesure.

En préliminaire, par convention, on entend par plan de surface de la carte, le plan supérieur, visible, de la carte posée à plat sur une surface horizontale. Ceci détermine les positions et orientation des axes de mesure de l'accéléromètre indiquées sur les figures 2a à 2c, relativement à la position de la carte dans l'espace.

On considère un capteur accéléromètre 2, à trois axes x, y z, monté à nu dans une carte à microcircuit 1, comme illustré sur la figure 2a. Les trois axes x, y et z sont orthogonaux deux à deux. Le capteur 2 est monté dans la carte tel que deux axes de mesure x, y, sont disposés parallèle au plan de surface de la carte, chacun parallèle à une dimension respective, I et L de la surface de la carte 1.

Ce capteur est calibré dans l'étape de personnalisation électrique de la carte, en sortie de chaîne de fabrication.

La calibration utilise de manière avantageuse, la force de gravitation terrestre. Le principe en est illustré sur les figures 2a à 2c. Pour chaque axe, la calibration comprend la détermination de l'offset, c'est-à-dire la valeur mesurée sur l'axe, alors que la carte ne subit aucune accélération, et le gain, qui nécessite une deuxième valeur mesurant l'accélération due à la seule composante gravitationnelle. Les deux points de mesure permettent de déterminer le gain. Il faut ainsi 2 valeurs de mesure (x₀,x₁), (y₀,y₁), (z₀,z₁) pour chaque axe x, y, z, donnant l'offset et permettant le calcul du gain. On peut ensuite déterminer la valeur de correction du gain, par comparaison entre le gain mesuré et la valeur de référence. De préférence, on s'arrange pour appliquer successivement l'attraction terrestre suivant chacun des axes à calibrer, ce qui simplifie les calculs : la valeur fournie par l'accéléromètre sur cet axe, correspond à ±g. Si on prend l'axe x, le gain est alors tout simplement égal à (x₁-x₀)/±g. Ceci est obtenu comme suit :
1). On place la carte 1 à plat sur une surface S horizontale, c'est-à-dire le plan de surface en position horizontale, et immobile, comme illustré en figure 2a. Dans l'exemple x est orienté positivement vers la droite et y est orienté positivement vers le fond. L'axe z, vertical au plan est orienté positivement vers le haut.
   Il n'y a aucune accélération suivant les axes x et y, et la force gravitationnelle F s'applique suivant l'axe z, en négatif dans l'exemple. On mesure alors sur chaque axe x et y la valeur d'offset que l'on note respectivement x₀ et y₀. Sur l'axe z, on mesure une valeur z₁ qui correspond à une accélération égale à +g sur l'axe z (accélération opposée à l'attraction terrestre).
2). On positionne la carte sur la tranche d'un grand côté L de la carte, par exemple comme indiqué sur la figure 2b (plan de surface vertical), de manière à ce que la force F s'applique suivant l'axe x, dans l'exemple en positif. On mesure alors une valeur x₁ correspondant à une accélération égale à -g sur l'axe x. On a une accélération nulle sur les deux autres axes y et z. On peut ainsi mesurer la valeur d'offset z₀ sur l'axe z.
3) On positionne la carte sur la tranche d'un petit côté I de la carte, par exemple comme indiqué sur la figure 2c, de manière à ce que la force F s'applique suivant l'axe y, en positif dans l'exemple. On mesure alors une valeur y₁, correspondant à une accélération égale à -g sur l'axe y. On a une accélération nulle sur les deux autres axes x et z.

Pour réaliser une calibration de ce type, utilisant la gravitation, mais à haute cadence en sortie d'usine, l'invention propose d'utiliser judicieusement le passage des cartes dans la machine de personnalisation des cartes en sortie d'usine.

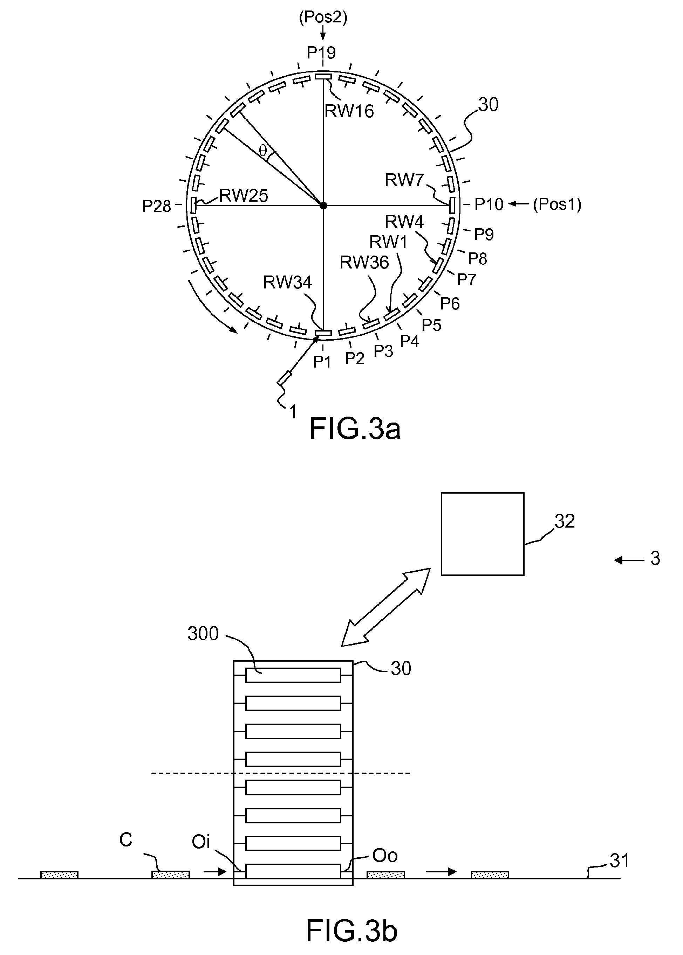

Les figures 3a et 3b illustrent une machine de personnalisation à haute cadence de cartes à microcircuit, du type à barillet N positions, communément utilisée. La machine de personnalisation 3 comprend un barillet avec un plateau rotatif 30, alimenté en cartes par un convoyeur 31 et piloté par un ordinateur 32. Le plateau circulaire rotatif comprend N dispositifs de connexion de cartes RW1 à RW36, appelés encore lecteurs, disposés en cercle à écart angulaire constant par rapport au centre de rotation O. Par exemple N=36.

Chaque lecteur comprend une ouverture Oi par laquelle est insérée une carte à personnaliser C, permettant la connexion de la carte à l'ordinateur 32 de la machine de personnalisation, par tout moyen de communication approprié. L'ordinateur de la machine pilote ainsi la personnalisation de chacune des cartes insérée dans un des lecteurs du plateau. Typiquement l'ordinateur pilote la transmission des données de personnalisation et leur programmation dans la carte.

Dans l'exemple illustré, les cartes C sont amenées par le convoyeur 31 et insérées une à une, chacune dans le lecteur qui se présente à elle, dans l'exemple dans la position P1 correspondant à une insertion de la carte en position horizontale dans le plateau. Une fois insérée, chaque carte passe par les N=36 positions P1 à P36 dans le plateau rotatif et ressort du lecteur par une ouverture Oo, quand le lecteur revient dans la position P1. Le plateau est ainsi actionné pour tourner de N pas à chaque tour, correspondant à la valeur de l'écart angulaire θ (relativement au centre de rotation O du plateau) entre deux positions successives. Dans l'exemple où N=36, le plateau tourne de θ=10 degrés à chaque pas. La vitesse de rotation du plateau est réglée pour réaliser la personnalisation de la carte le temps d'une rotation complète. Le temps d'immobilité entre chaque pas, correspond ainsi au temps de déchargement de la carte personnalisée, et du chargement d'une nouvelle carte à personnaliser, dans le lecteur en position de chargement P1.

Le procédé de calibration d'un capteur accéléromètre suivant l'invention consiste à utiliser ce temps d'immobilité, pour faire envoyer à la machine des commandes de mesures d'accéléromètre, dans des positions choisies des lecteurs. A chaque position d'un lecteur correspond une position correspondante, connue, de la carte qui y est insérée. La carte active alors l'accéléromètre qui fournit les valeurs mesurées sur chacun de ses axes. Les positions sont choisies pour permettre la détermination de l'offset et le gain sur chaque axe. Pour chaque axe à calibrer, il faut une mesure correspondant à une composante de gravitation nulle sur cet axe, et une autre mesure correspondant à une composante de gravitation non nulle sur cet axe.

Pour optimiser le procédé, c'est-à-dire optimiser le nombre de mesures et de calcul à effectuer, et mobiliser le moins de ressources possibles de la carte, il est intéressant d'utiliser des positions de la carte telle que la force gravitationnelle F s'applique parallèlement à chaque axe, comme expliqué supra en relation avec les figures 2a à 2c.

Cependant, ceci ne peut pas s'appliquer complètement dans la machine de personnalisation, car le plan de surface de la carte ne tourne qu'autour de deux axes dans le plateau, correspondant à l'axe vertical et l'axe parallèle à la direction d'insertion de la carte dans le lecteur. Ainsi on sait reproduire dans le plateau rotatif, les positions des figures 2a (rotation autour de y) et 2b (rotation autour de z), en prenant les positions P1 ou P19 pour la première, P10 ou P28 pour la deuxième, mais pas celle de la figure 2c (rotation autour de x).

Si on a un accéléromètre bi axe, avec un axe z orthogonal au plan de surface de la carte et un axe x parallèle au grand côté de la carte correspondant à la direction d'insertion dans le lecteur, on réalise la calibration de ces deux axes, en activant sur chaque carte deux mesures d'accéléromètre, une première dans la position P1 ou P19, une deuxième dans la position P10 ou P28.

Si on veut calibrer un accéléromètre bi axe dont les deux axes sont dans le plan de surface de la carte, ou un accéléromètre tri axe, il faut utiliser une autre position de la carte dans laquelle l'accélération gravitationnelle fera un angle par rapport aux deux axes dans le plan de la carte, et aura donc une composante sur l'axe y. Comme on connaît la position de la carte, on sait déterminer la composante gravitationnelle sur l'axe y et l'utiliser, pour calculer le gain. Comme cette composante de la gravitation sur l'axe y est fonction de la machine de personnalisation utilisée, ceci suppose que la machine transmet cette information à chaque carte. Ceci suppose en outre des mesures dans trois positions pour chaque carte pour pouvoir calibrer deux axes dans le plan de la carte.

Or le temps de personnalisation est assez contraint. On veut pouvoir traiter le plus de cartes dans le moins de temps possible. Selon les applications, ajouter des données et des opérations dans le processus de personnalisation peut obliger à réduire la vitesse de rotation du plateau, et donc à réduire la cadence.

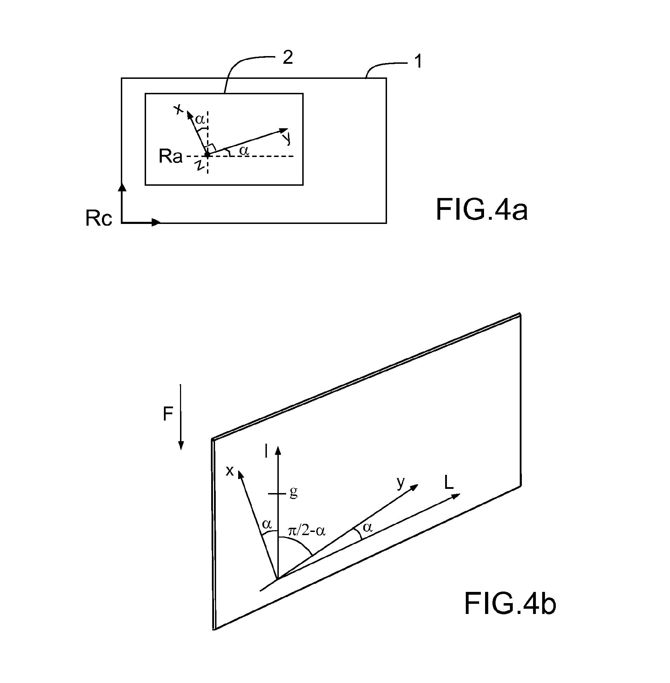

Le perfectionnement suivant permet avantageusement de calibrer un, deux ou trois axes d'un accéléromètre en seulement deux mesures, sans transmission de données supplémentaires de la machine vers la carte, en utilisant les deux positions optimales de la carte dans le plateau dans lesquelles la carte est en position horizontale et verticale. Comme illustré sur les figures 4a et 4b, ce perfectionnement consiste à intégrer l'accéléromètre dans la carte en sorte que ses deux axes x et y dans le plan de surface de la carte, fassent chacun un angle α avec les axes I et L correspondant aux dimensions de la carte. On pallie ainsi le manque de degrés de liberté dans le plateau, en utilisant un transfert de coordonnées du référentiel Rc de la carte, définit par ses dimensions I et L, dans le référentiel Ra de l'accéléromètre, définit par ses axes x et y dans le plan de surface, et qui fait un angle α avec le référentiel Rc de la carte.

Le procédé ne dépend alors plus de la machine de personnalisation mais s'applique de manière universelle.

Le procédé permet alors avec uniquement deux mesures, typiquement en position horizontale et en position verticale de la carte, d'obtenir tous les points permettant la calibration de l'offset et du gain sur chaque axe de mesure pour un, deux ou trois axes.

Plus spécialement et en référence aux figures 4a et 4b, on connait l'angle α que fait l'axe x, respectivement y, avec l'axe I, respectivement L (Fig. 4a). Quand la carte est dans une position verticale, par exemple dans la position verticale de la figure 4b, correspondant à la position P28 du lecteur dans le plateau, on sait donc calculer la composante d'accélération sur chaque axe x et y, due à l'attraction terrestre, par projection (Figure 4b). Il s'agit d'un simple transfert de coordonnées. Sur la figure 4b, la force F gravitationnelle s'applique en négatif suivant I. L'accélération suivant I est alors égale à +g. Dans le référentiel Ra de l'accéléromètre, cela correspond a une composante égale à gcosα sur x et gcos(π/2-α) sur y (Figure 4b).

On remarquera que ce perfectionnement s'applique bien à la calibration d'un accéléromètre 2 axes, dont les deux axes seraient disposés orthogonaux dans le plan de surface de la carte, mais faisant un angle α avec le référentiel de la carte donné par ses dimensions. Il s'applique ainsi très généralement à la calibration d'un, de deux ou de trois axes d'un accéléromètre d'une carte à microcircuit.

En pratique, on n'utilisera de préférence pas la position P1 de chargement des cartes, car à ce moment la carte ne contient pas encore de données de personnalisation ; en particulier, elle ne contient pas encore les données correspondant à la mise en oeuvre de l'étape de calibration. Dans l'exemple illustré (figures 3a où 3b) où P1 correspond à une position de carte horizontale, on préférera utiliser la position diamétralement opposée P10 pour la mesure en position horizontale.

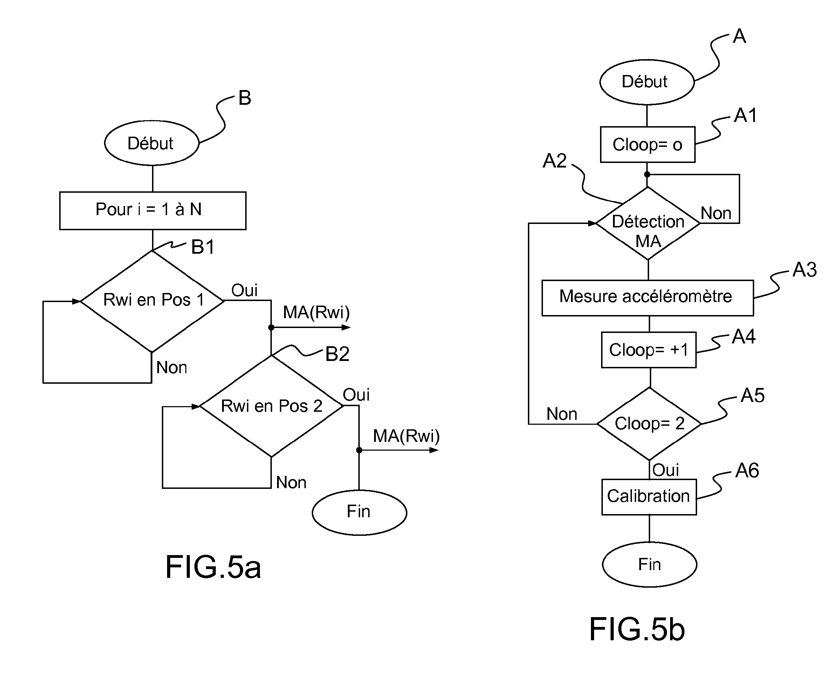

Les figures 5a et 5b illustrent les processus A et B respectivement dans chaque carte 1 insérée dans un lecteur de la machine et dans la machine 3, correspondant à un exemple de mise en oeuvre d'un procédé de calibration selon l'invention, pour un plateau rotatif à N positions à chargement en position horizontale basse comme illustré sur la figure 3a, et dans le cas optimal de mise en oeuvre utilisant uniquement deux positions de la carte, une première position Pos1, verticale, correspondant à la position P10 dans le plateau, et une deuxième position Pos2, horizontale correspondant à la position P19 dans le plateau (Figure 3a).

Pour chaque carte 1 insérée en position P1 de chargement dans le plateau, dans l'exemple dans un lecteur RWi, ou i=1 à N, la machine 3 implémente le processus B suivant :
Quand la carte arrive dans la première position Pos1, elle envoie, dans le temps d'immobilité dans cette position, une commande MA à la carte 1, via le lecteur RWi, pour déclencher une demande de mesure d'accéléromètre par la carte (étape B1).
Quand la carte arrive dans la deuxième position Pos2, elle envoie dans le temps d'immobilité dans cette position, une commande MA à la carte 1, via le lecteur RWi, pour déclencher une demande de mesure d'accéléromètre (étape B2).

Chaque carte 1 insérée dans un lecteur du plateau implémente le processus A suivant, déclenché en pratique dès que la carte a reçu des données correspondantes dans les premières étapes de personnalisation de la machine :
- Initialisation d'un compteur Cloop de mesures de calibration (étape A1).
- Attente d'une commande de mesure MA (étape A2).
- Sur détection MA, déclenchement d'une mesure d'accéléromètre, lecture de la mesure et mémorisation de la mesure (étape A3) ; incrémentation du compteur (étape A4). Test du compteur CLoop (étape A5).

Si le compteur ne comptabilise pas 2 mesures, retour à l'étape A2.

Si le compteur comptabilise 2 mesures, déclenchement de la calibration (étape A6) pour déterminer les valeurs caractéristiques d'offset et de gain de l'accéléromètre, à partir des mesures fournies par l'accéléromètre, comparaison aux valeurs caractéristiques de réglage usine, pour déterminer la correction à appliquer aux mesures fournies par l'accéléromètre.

Ces valeurs caractéristiques calculées dans l'étape de calibration, pendant la personnalisation électrique de la carte et programmées dans la carte sont ensuite utilisées en opérationnel par la carte pour corriger les mesures fournies par le capteur.

Le compteur peut être un compteur de boucles logiciel, incrémenté à chaque mesure. Selon un mode de fonctionnement, ces valeurs sont chargées dans les registres de l'accéléromètre à chaque mise sous tension de la carte. Si le procédé utilise plus de deux positions, la boucle de test sur le compteur est adaptée.

Le procédé de fabrication qui vient d'être décrit permet de calibrer un capteur MEMS intégré à nu dans une carte à microcircuit, de manière optimale, à haute cadence, notamment, mais non limitativement, un capteur de pression, ou un accéléromètre mono ou multi axes, ou encore un inclinomètre, c'est-à-dire un capteur comprenant deux accéléromètres et des moyens de traitement des mesures d'accélération pour fournir un angle d'inclinaison par rapport à l'horizontale. Il permet d'utiliser ces capteurs montés à nu dans la carte de manière fiable, par la correction de leurs mesures calculée dans l'étape de calibration suivant l'invention, représentative des contraintes mécaniques subies pendant l'encartage et la découpe.

Par extension et par analogie, le procédé selon l'invention s'étend à la fabrication d'entités électroniques de poche ou portables, à capteurs MEMS intégrés, dans lesquelles ces capteurs seront montés à nus, et calibrés dans l'étape de personnalisation électrique de ces entités. On peut prévoir différents capteurs dans une entité électronique, qui seront chacun calibrés dans l'étape de personnalisation électrique, suivant le procédé de l'invention. Dans le cas d'un capteur de pression, dans laquelle la mesure du capteur ne dépend spécialement d'une position du capteur, la calibration sera conduite comme déjà décrite précédemment. Dans le cas d'un capteur accéléromètre, on réalisera des mesures dans des positions de l'unité telle que dans chaque position, la force de gravitation ait un composant non nulle sur au moins un axe.

Dans une variante et par analogie à la figure 2a, avec une entité électronique s'inscrivant dans une forme avec une surface sensiblement plane, définie par une longueur L et une largeur I, intégrant un capteur accéléromètre à au moins deux axes x, y disposés orthogonaux dans un plan parallèle à ladite surface, l'étape de montage à nu du capteur comprendra un positionnement du capteur tel que les deux axes x et y soient chacun parallèle à une dimension respective L, I de cette surface.

Dans une variante et par analogie avec la figure 4a, l'étape de montage à nu du capteur comprendra un positionnement du capteur tel que les deux axes x et y forment chacun un angle déterminé (α) avec une dimension respective I, L de cette surface.

Un troisième axe de mesure d'un capteur sera disposé orthogonal à cette surface de l'entité électronique.

L'invention ne se limite pas aux exemples de mise en oeuvre décrits et illustrés. Elle s'étend à toute entité électronique de poche apte à recevoir un ou des capteurs MEMS dans un montage à nu, et à être personnalisé avec des données programmées dans une étape de personnalisation électrique. Elle s'applique à tout capteur MEMS nécessitant une calibration, notamment une calibration d'un offset et/ou d'un gain.

## Revendications

1. Procédé de fabrication d'une entité électronique de poche ou portable à capteur(s) micro ou nano électromécanique(s), **caractérisé en ce qu'**il comprend une étape de fabrication de ladite entité électronique avec un montage à nu d'un capteur ou de capteurs dans ladite unité, suivie d'une étape de calibration dudit ou desdits capteurs, réalisée dans une étape de personnalisation électrique de ladite entité avec des données de personnalisation, et comprenant une étape d'activation de mesure(s) dudit ou desdits capteurs, une étape de calcul de valeurs de réglage du capteur utilisant ladite ou lesdites mesures et une ou des valeurs de référence, où une valeur de référence est une donnée de personnalisation de ladite entité, et une étape de programmation desdites valeurs de réglage dans ladite unité.

2. Procédé de fabrication selon la revendication 1, appliqué à la fabrication d'une entité électronique de poche ou portable à capteur accéléromètre mono ou multi-axes intégré, dans lequel lesdites valeurs de référence sont des valeurs de réglage usine dudit capteur, et dans lequel les mesures du capteur sont effectuées dans des positions déterminées de ladite entité dans ladite étape de personnalisation, telles que dans chacune desdites positions, la force gravitationnelle a une valeur connue non nulle sur au moins un axe de mesure d'accéléromètre à calibrer.

3. Procédé de fabrication selon la revendication 2, appliqué à une entité électronique s'inscrivant dans une forme avec une surface sensiblement plane, définie par une longueur (L) et une largeur (I), intégrant un capteur accéléromètre à au moins deux axes (x, y) disposés orthogonaux dans un plan parallèle à ladite surface, **caractérisé en ce que** ladite étape de montage à nu du capteur comprend un positionnement du capteur tel que lesdits deux axes (x,y) soient chacun parallèle à une dimension respective (L, I) de ladite surface.

4. Procédé de fabrication selon la revendication 2, appliqué à une entité électronique s'inscrivant dans une forme avec une surface sensiblement plane, définie par une longueur (L) et une largeur (I), intégrant un capteur accéléromètre a au moins deux axes (x, y) disposés orthogonaux dans un plan parallèle à ladite surface, **caractérisé en ce que** ladite étape de montage à nu du capteur comprend un positionnement du capteur tel que lesdits deux axes (x,y) forment chacun un angle déterminé (α) avec une dimension respective (L,I) de ladite surface.

5. Procédé de fabrication selon la revendication 3 ou 4, pour un capteur accéléromètre trois axes, où le troisième axe de mesure est disposé orthogonal à ladite surface de l'entité électronique.

6. Procédé de fabrication selon la revendication 1, **caractérisé en ce que** l'étape de calibration d'un capteur de ladite carte est mise en oeuvre dans une machine de personnalisation (3) à barillet (30) à N positions (P1-P36), et comprend une étape d'activation de mesure(s) dudit capteur dans une ou des positions du barillet.

7. Procédé de fabrication suivant la revendication 6, d'une carte intégrant un capteur accéléromètre à un axe de mesure, ou à deux ou trois axes de mesure (x,y,z) orthogonaux deux à deux, dans lequel l'étape de mesure de l'étape de calibration dudit capteur comprend deux mesures, une mesure dans une position du barillet dans laquelle une surface de l'entité électronique comprenant un ou deux axes de mesure dudit capteur est sensiblement à l'horizontale (Pos2), et une position du barillet dans laquelle ladite surface est sensiblement verticale (pas1), pour mesurer une accélération correspondante due à la force gravitationnelle sur chaque axe, et déterminer une valeur d'offset et de gain correspondante pour chaque axe.

8. Procédé de fabrication selon la revendication 7, **caractérisé en ce que** l'étape de calcul de l'étape de calibration comprend une comparaison des valeurs de gain et d'offset déterminées à l'étape de mesure, à des valeurs de référence de gain et d'offset, lesdites valeurs étant des valeurs de réglage usine dudit capteur.

9. Procédé de fabrication suivant la revendication 7 ou 8, dans lequel le capteur est positionné avec un axe (z) de mesure du capteur orthogonal à la surface de la carte et un axe de mesure (x) dans un plan parallèle à la surface de la carte, et orthogonal à une direction d'insertion de ladite carte dans la position de chargement du barillet.

10. Procédé de fabrication suivant l'une des revendications 7 à 9, dans lequel le capteur est positionné avec deux axes de mesure orthogonaux entre eux (x, y) dans un plan parallèle à la surface de la carte, tels que lesdits deux axes (x,y) forment un repère orthogonal (Ra) qui fait un angle déterminé (α) avec un repère orthogonal (Rc) défini par les dimensions (I, L) de surface de la carte, dans lequel l'étape de calcul de calibration comprend un transfert des coordonnées de la force de gravitation dans le repère (Rc) du plan de surface vers le repère (Ra) desdits deux axes (x,y).

11. Procédé de fabrication selon l'une quelconque des revendications 1 à 10 dans lequel l'entité électronique est une carte à microcircuit(s).

12. Utilisation d'une machine à barillet N positions, pour la personnalisation électrique de cartes à microcircuit(s), pour la mise en oeuvre d'une étape de calibration de capteur(s) micro ou nano électromécaniques intégrés selon un procédé de fabrication selon l'une quelconque des revendications 1 à 11.

## Patentansprüche

1. Verfahren zur Herstellung einer elektronischen Taschen- oder tragbaren Einheit mit einem oder mehreren mikro- oder nano-elektromechanischen Sensoren, **dadurch gekennzeichnet, dass** es die folgenden Schritte beinhaltet: einen Schritt des Herstellens der elektronischen Einheit mit einer Rohmontage von einem oder mehreren Sensoren in der Einheit, gefolgt von einem Schritt des Kalibrierens der ein oder mehreren Sensoren, der während eines Schrittes des elektrischen Personalisierens der Einheit mit Personalisierungsdaten ausgeführt wird, und einen Schritt des Aktivierens von Messungen der ein oder mehreren Sensoren, einen Schritt des Berechnens von Einstellwerten des Sensors anhand der ein oder mehreren Messungen und eines oder mehrerer Referenzwerte, wobei ein Referenzwert ein Personalisierungsdatenelement der Einheit ist, und einen Schritt des Programmierens der Einstellwerte in die Einheit.

2. Herstellungsverfahren nach Anspruch 1, angewandt auf die Herstellung einer Taschen- oder tragbaren elektronischen Einheit mit einem integrierten ein- oder mehrachsigen Beschleunigungsmesssensor, wobei die Referenzwerte werksseitige Einstellwerte des Sensors sind und wobei die Messungen des Sensors an bestimmten Positionen der Einheit während des Personalisierungsschrittes durchgeführt werden, so dass an jeder der Positionen die Schwerkraft einen bekannten Wert von ungleich null auf wenigstens einer Messachse des zu kalibrierenden Beschleunigungsmessers hat.

3. Herstellungsverfahren nach Anspruch 2, angewandt auf eine elektronische Einheit, eingeschrieben in eine Form mit einer im Wesentlichen flachen Fläche, definiert durch eine Länge (L) und eine Breite (1), in die ein Beschleunigungsmesssensor mit wenigstens zwei Achsen (x, y) integriert ist, die orthogonal in einer Ebene parallel zu der Fläche angeordnet sind, **dadurch gekennzeichnet, dass** der Rohmontageschritt des Sensors das Positionieren des Sensors so beinhaltet, dass die zwei Achsen (x, y) jeweils parallel zu einer jeweiligen Dimension (L, 1) der Fläche sind.

4. Herstellungsverfahren nach Anspruch 2, angewandt auf eine elektronische Einheit, eingeschrieben in eine Form mit einer im Wesentlichen flachen Oberfläche, definiert durch eine Länge (L) und eine Breite (1), in die ein Beschleunigungsmesssensor mit wenigstens zwei Achsen (x, y) integriert ist, die orthogonal in einer Ebene parallel zu der Fläche angeordnet sind, **dadurch gekennzeichnet, dass** der Rohmontageschritt des Sensors das Positionieren des Sensors so beinhaltet, dass die zwei Achsen (x, y) jeweils einen bestimmten Winkel (α) mit einer jeweiligen Dimension (L, 1) der Fläche bilden.

5. Herstellungsverfahren nach Anspruch 3 oder 4 für einen Drei-Achsen-Beschleunigungsmesssensor, wobei die dritte Messachse orthogonal zur Fläche der elektronischen Einheit angeordnet ist.

6. Herstellungsverfahren nach Anspruch 1, **dadurch gekennzeichnet, dass** der Schritt des Kalibrierens eines Sensors der Karte in einer Personalisierungsmaschine (3) mit einem Zylinder (30) mit N Positionen (P1-P36) implementiert wird und dass es einen Schritt des Aktivierens der Messung(en) des Sensors in einer oder mehreren Positionen des Zylinders beinhaltet.

7. Herstellungsverfahren nach Anspruch 6 für eine Karte, in die ein Beschleunigungsmesssensor mit einer Messachse oder mit zwei oder drei Messachsen (x, y, z) integriert ist, die paarweise orthogonal sind, wobei der Messschritt des Schrittes des Kalibrierens des Sensors zwei Messungen umfasst, eine Messung in einer Zylinderposition, in der eine Fläche der elektronischen Einheit, die eine oder zwei Messachsen des Sensors umfasst, im Wesentlichen horizontale (Pos2) ist, und eine Messung in einer Zylinderposition, in der die Fläche im Wesentlichen vertikal (Pos1) ist, um eine entsprechende schwerkraftbedingte Beschleunigung auf jeder Achse zu messen und um einen entsprechenden Versatz- und Gewinnwert für jede Achse zu ermitteln.

8. Herstellungsverfahren nach Anspruch 7, **dadurch gekennzeichnet, dass** der Rechenschritt des Kaliblierungsschlitts ein Vergleichen von während des Messschritts ermittelten Gewinn- und Versatz-Werten mit Referenz-Gewinn- und -Versatzwerten beinhaltet, wobei die Werte werksseitige Einstellwerte des Sensors sind.

9. Herstellungsverfahren nach Anspruch 7 oder 8, wobei der Sensor mit einer Messachse (z) des Sensors orthogonal zur Fläche der Karte und einer Messachse (x) in einer Ebene parallel zur Fläche der Karte und orthogonal zu einer Einführungsrichtung der Karte in die Ladeposition des Zylinders positioniert ist.

10. Herstellungsverfahren nach einem der Ansprüche 7 bis 9, wobei der Sensor mit zwei Messachsen (x, y) orthogonal zueinander in einer Ebene parallel zur Fläche der Karte positioniert ist, so dass die zwei Achsen (x, y) eine orthogonale Markierung (Ra) bilden, die einen bestimmten Winkel (α) mit einer orthogonalen Markierung (Rc) bildet, definiert durch die Flächendimensionen (1, L) der Karte, wobei der Kalibrierungsrechenschritt das Übertragen der Koordinaten der Schwerkraft in der Markierung (Rc) der Flächenebene auf die Markierung (Ra) der zwei Achsen (x, y) beinhaltet.

11. Herstellungsverfahren nach einem der Ansprüche 1 bis 10, wobei die elektronische Einheit eine Chipkarte ist.

12. Verwendung einer Zylindermaschine mit N Positionen zum elektrischen Personalisieren von Chipkarten, um einen Schritt des Kalibrierens von integrierten mikro- oder nano-elektromechanischen Sensoren mit einem Herstellungsverfahren nach einem der Ansprüche 1 bis 11 zu implementieren.

## Claims

1. A method for manufacturing a pocket or portable electronic unit with one or more micro- or nano-electromechanical sensor(s), **characterised in that** it comprises a step of manufacturing said electronic unit with a blank assembly of one or more sensor(s) in said unit, followed by a step of calibrating said one or more sensor(s) that is carried out during a step of electrically personalising said unit with personal data, and comprising a step of activating measurement(s) of said one or more sensor(s), a step of computing trimming values of said sensor using said one or more measurement(s) and one or more reference value(s), where a reference value is an item of personal data of said unit, and a step of programming said trimming values into said unit.

2. The manufacturing method according to claim 1, applied to the manufacture of a pocket or portable electronic unit with an integrated single- or multi-axis accelerometer sensor, wherein said reference values are factory trimming values of said sensor and wherein the measurements of said sensor are carried out in determined positions of said unit during said personalisation step, such that in each of said positions the gravitational force has a known non-zero value on at least one axis of measurement of the accelerometer to be calibrated.

3. The manufacturing method according to claim 2, applied to an electronic unit inscubed into a form with a substantially flat surface, defined by a length (L) and a width (1), integrating an accelerometer sensor with at least two axes (x, y) disposed orthogonally in a plane parallel to said surface, **characterised in that** said step of the blank assembly of said sensor comprises positioning said sensor such that said two axes (x, y) are each parallel to a respective dimension (L, 1) of said surface.

4. The manufacturing method according to claim 2, applied to an electronic unit inscubed into a form with a substantially flat surface, defined by a length (L) and a width (1), integrating an accelerometer sensor with at least two axes (x, y) disposed orthogonally in a plane parallel to said surface, **characterised in that** said step of the blank assembly of said sensor comprises positioning said sensor such that said two axes (x, y) each form a determined angle (α) with a respective dimension (L, 1) of said surface.

5. The manufacturing method according to claim 3 or 4 for a triple-axis accelerometer sensor, where the third measurement axis is disposed orthogonal to said surface of said electronic unit.

6. The manufacturing method according to claim 1, **characterised in that** said step of calibrating a sensor of said card is implemented in a cylinder (30) personalisation machine (3) with N positions (P1-P36), and comprises a step of activating the measurement(s) of said sensor in one or more positions of said cylinder.

7. The manufacturing method according to claim 6 for a card integrating an accelerometer sensor with one axis of measurement or with two or three axes of measurement (x, y, z) that are orthogonal in pairs, wherein the measurement step of said step of calibrating said sensor comprises two measurements, one measurement in a cylinder position in which a surface of said electronic unit comprising one or two axes of measurement of said sensor is substantially horizontale (Pos2) and one measurement in a cylinder position in which said surface is substantially vertical (Pos1), so as to measure a corresponding acceleration due to the gravitational force on each axis and to determine a corresponding offset and gain value for each axis.

8. The manufacturing method according to claim 7, **characterised in that** said computation step of said calibration step comprises comparing gain and offset values determined during the measurement step with reference gain and offset values, said values being factory trimming values of said sensor.

9. The manufacturing method according to claim 7 or 8, wherein said sensor is positioned with an axis (z) of measurement of said sensor that is orthogonal to the surface of said card and an axis (x) of measurement in a plane that is parallel to the surface of said card and is orthogonal to a direction for inserting said card in the load position of said cylinder.

10. The manufacturing method according to any one of claims 7 to 9, wherein said sensor is positioned with two axes of measurement (x, y) orthogonal to each other in a plane that is parallel to the surface of said card, such that said two axes (x, y) form an orthogonal identifier (Ra) that makes a determined angle (α) with an orthogonal identifier (Rc) defined by the surface dimensions (1, L) of said card, wherein said calibration computation step comprises transferring the coordinates of the gravitational force in the identifier (Rc) of the surface plane to the identifier (Ra) of said two axes (x, y).

11. The manufacturing method according to any one of claims 1 to 10, wherein said electronic unit is a chip card.

12. The use of a cylinder machine with N positions for electrically personalising chip cards in order to implement a step of calibrating integrated micro- or nano-electromechanical sensor(s) according to a manufacturing method according to any one of claims 1 to 11.
